# EUROPÄISCHE PATENTSCHRIFT

(11) **EP 2 257 460 B1**
(45) Veröffentlichungstag und Bekanntmachung des Hinweises auf die Patenterteilung: **26.02.2014**
(21) Anmeldenummer: 09722694.8
(22) Anmeldetag: 19.03.2009
(51) Int. Cl.: B62D 53/08, B62D 53/10

(54) **SATTELKUPPLUNG**
FIFTH-WHEEL COUPLING
SELLETTE D'ATTELAGE

(30) Priorität: 20.03.2008 DE 102008000799
(43) Veröffentlichungstag der Anmeldung: 08.12.2010
(73) Patentinhaber: Jost-Werke GmbH, 63263 Neu-Isenburg (DE)
(72) Erfinder: ALGÜERA, José Manuel, 63739 Aschaffenburg (DE); EIERMANN, Michael, 64319 Pfungstadt (DE); SAUPE, Swen, 55122 Mainz (DE); STRÜTT, Achim, 64560 Riedstadt (DE)
(74) Vertreter: Mehler Achler
(86) Internationale Anmeldenummer: PCT/EP2009/053254
(87) Internationale Veröffentlichungsnummer: WO 2009/115576

(56) Entgegenhaltungen:
- DE-A1- 4 435 762
- US-A- 3 600 006
- US-A- 3 876 239
- US-A- 5 876 055
- US-A1- 2004 145 150

## Beschreibung

Die Erfindung betrifft eine Sattelkupplung mit einer Sattelkupplungsplatte, an der eine Einfahröffnung für einen Königszapfen angeordnet ist, mit einer mindestens einteiligen Verschlusseinrichtung für die Festlegung des Königszapfens und mit einem an der Verschlusseinrichtung angreifenden Fixierelement, das von einer Verschlussstellung in eine Offenstellung und umgekehrt bewegbar ist.

Nutzfahrzeuge bestehen in der Regel aus einem Zugfahrzeug und einem oder mehreren gezogenen Anhängern. Bei einem solchen Gliederzug spricht man von Motorwagen mit Anhänger, beim Sattelzug von einer Zugmaschine und einem Auflieger.

Geparkte und nicht angetriebene Fahrzeugteile können durch mechanische Vorrichtungen jeweils gegen Diebstahl gesichert werden. Die motorisierten Teile des Lastkraftwagens sind meist ebenfalls gegen Einbruch und Diebstahl gesichert, beispielsweise durch Wegfahrsperren oder Alarmanlagen. Sind beide Fahrzeugteile miteinander gekuppelt, besteht ein gewisser Diebstahlschutz über diese Systeme für den gesamten Sattelzug, da ein Abkuppeln nur durch Relativbewegung beider Fahrzeugteile zueinander möglich ist.

Die Anzahl an Diebstählen, bei denen das angetriebene Fahrzeug vom Anhänger oder Auflieger getrennt und dieser anschließend entwendet wird, nimmt jedoch trotz der derzeitigen technischen Hilfsmittel dennoch stetig zu. Es ist daher wünschenswert, Vorrichtungen und Systeme zur Verfügung zu stellen, die verhindern, dass der Auflieger unbefugt abgesattelt werden kann oder zumindest dieser Vorgang so erschwert wird, dass der Versuch dazu von vornherein als aussichtslos erscheint.

Aus der WO 03/043838 A2 ist eine Diebstahlsicherung für Sattelkupplungen bekannt, die eine Betätigungseinrichtung mit einem Blockierstift umfasst. Die Sattelkupplung weist einen Verschlusshaken mit einem Sicherungsriegel auf, der über ein Gestänge mit einer Zugstange von Hand betätigbar ist.

Die Diebstahlsicherung sieht vor, dass der Blockierstift entweder in die Bewegungsbahn des Sicherungsriegels oder die der Komponenten des Gestänges zur Betätigung des Sicherungsriegels eingefahren wird, so dass der Sicherungsriegel nicht von seiner Schließstellung in eine Offenstellung bewegt werden kann.

Die Diebstahlsicherungseinrichtung weist einen Empfänger auf, über den die Betätigungseinrichtung angesteuert werden kann. Die Diebstahlsicherungseinrichtung ist an ein Global Positioning System des Zugfahrzeugs gekoppelt. Wenn sich das Fahrzeug nicht auf der vorgesehenen Route bewegt, wird dies von dem GP-System erkannt und ein Signal zur Scharfschaltung des Diebstahlsicherungssystems an den Empfänger gesandt, woraufhin der Blockierstift in Blockierstellung gebracht wird.

Gemäß einer anderen Ausführung kann die Diebstahlsicherungseinrichtung auch per Internet mittels eines extern angeordneten PC's über den Bordcomputer des Zugfahrzeugs angesteuert werden.

Manipulationsversuche an der Sattelkupplung werden ebenfalls von dem Diebstahisicherungssystem erkannt, was daraufhin selbsttätig in Scharfstellung und somit auch in die Verriegelungsposition geht.

In der WO 03/044627 desselben Anmelders werden weitere Sicherungssysteme beschrieben, wobei unter anderem die Berechtigung des Fahrers über die Eingabe eines Codes überprüft wird. Im Falle der Nichtbeachtung oder im Fall des Abweichens von der Fahrtroute wird automatisch in die Fahrzeugfunktionen eingegriffen.

Die WO 2005/028290 A1 offenbart eine Sattelkupplung mit Diebstahlsicherung, bei der ein Blockierstift unmittelbar am Verschlusshaken angreift und diesen festlegt. Über die Zugstange kann die Verriegelung aufgehoben werden. Ein gewaltsames Trennen von Zugfahrzeug und Auflieger kann dann nicht verhindert werden, weil sich bei ruckartigem Anfahren des Sattelzugs unter Beschädigung oder sogar Zerstörung der Diebstahlsicherungseinrichtung der Verschlusshaken in Offenstellung drehen kann.

Die Diebstahlsicherungseinrichtung umfasst ein Steuergerät in der Fahrerkabine des Zugfahrzeugs, in das zur Freischaltung ein Zahlencode eingegeben werden kann. Ferner sind Sensoren und Anzeigen mit dem Steuerungsgerät zur Überwachung der Sattelkupplung verbunden.

Die DE 195 16 101 A1 beschreibt eine Diebstahlsicherung für einen angekuppelten 5attelaufüeger. Zum Schutz eines an ein Zugfahrzeug angekuppelten Sattelaufliegers gegen Diebstahl durch Abkupplung weist die Sattelkupplung ein Schloss auf, über das ein axial bewegbarer Stößel gesteuert wird. Der Stößel greift unmittelbar am Verriegelungselement des Verschlusshakens an, wenn dieser sich in Sperrstellung befindet. Die Anordnung der Diebstahlsicherungseinrichtung ist so gewählt, dass der Stößel allenfalls durch Druck beaufschlagt wird. Die Blockierung des handbetätigten Verschlusshakens hat den Vorteil, dass bei einer Schockbeanspruchung bzw. Überlastung der Handbetätigung die querschnittsschwächeren Glieder der Handbetätigung brechen und in jedem Fall die Verriegelung des Verschlusshakens intakt bleiben. Sämtliche Teile der Diebstahlsicherung werden bei einem gewaltsamen Entriegelungsversuch auf Druck beansprucht, so dass verhältnismäßig geringe Querschnitte die geforderte Funktionssicherheit bieten.

Diebstahlsicherungseinrichtungen greifen in der Regel am Verschlusssystem der Sattelkupplung an und sollen das Verschlusssystem blockieren, so dass es nicht geöffnet werden kann. Die Diebstahlsicherung bietet selbst keinen mechanischen Schutz, der das Abkoppeln des Aufliegers verhindern könnte. Dies liegt unter anderem auch daran, dass das Diebstahlsicherungssystem bzw. die Bauteile, die das Verschlusssystem blockieren, nicht entsprechend stabil und widerstandsfähig ausgebildet sind, um ein gewaltsames Öffnen des Verschlusssystems zu verhindern.

Es ist daher Aufgabe der Erfindung, eine Sattelkupplung mit einer Sicherung auszustatten, die gegebenenfalls zusammen mit einer Diebstahlsicherungseinrichtung eingesetzt werden kann und die eine zusätzliche Absicherung gegen unbefugtes Abkoppeln des Aufliegers gewährleistet.

Diese Aufgabe wird mit einer Sattelkupplung gemäß den Merkmalen des Anspruchs 1 gelöst. Die Sattelkupplung ist dadurch gekennzeichnet, dass eine Sicherungseinrichtung mit einem Sperrelement vorgesehen ist, das von einer Ruhe- in eine Sperrstellung und umgekehrt bewegbar ist, dass das Sperrelement mindestens in der Sperrstellung in die Einfahröffnung ragt und dass das Sperrelement in der Sperrstellung festgelegt ist, wenn das Fixierelement sich in unbefugter Weise in Offenstellung befindet.

Das Sperrelement der zusätzlichen Sicherungseinrichtung bildet eine mechanische Sperre, die auch dann das Ausfahren des Königszapfens blockiert, wenn z. B. eine Diebstahlsicherung gewaltsam ausgeschaltet worden ist und/oder das Öffnen der Verschlusseinrichtung unbefugterweise durchgeführt wird. Es wird mit dem Sperrelement eine zusätzliche mechanische Barriere geschaffen, die so stabil ausgebildet ist, dass sie einer gewaltsamen Manipulation widersteht.

Die Festlegung des Sperrelementes in seiner Sperrstellung ist von Vorteil, um zu verhindern, dass das Sperrelement durch unbefugte Betätigung des Verschlusssystems nicht wieder in seine Ruheposition zurückbewegt werden kann, wodurch es einem potentiellen Dieb unter Umständen gelingen könnte, doch noch die Einfahröffnung der Sattelkupplung freizulegen, um ein Ausfahren des Königszapfens zu ermöglichen.

Das Sperrelement ist vorzugsweise verdeckt innerhalb der Sattelkupplung angeordnet und somit von außen nicht zugänglich. Es kann vorzugsweise nicht manuell betätigt werden.

Die Verschlusseinrichtung kann ein schwenkbarer Verschlusshaken sein oder sie kann aus zwei oder mehr Komponenten bestehen, die in der verriegelten Stellung den Königszapfen umgreifen.

Als Fixierelement, das die Verschlusseinrichtung in ihrer Verschlussstellung fixiert und damit blockiert, kann je nach Ausgestaltung der Verschlusseinrichtung ein Verschlussriegel oder eine Verschlussklammer vorgesehen sein.

Gemäß einer ersten Ausführungsform ist das Fixierelement ein Verschlussriegel und das Sperrelement wirkt mit dem Verschlussriegel zusammen. Das Sperrelement kontaktiert vorzugsweise den Verschlussriegel und ist im Fall einer unbefugten Betätigung des Verschlusssystems an die Bewegung des Verschlussriegels gekoppelt. Wenn der Verschlussriegel in unbefugter Weise in Offenstellung bewegt wird, wird das Sperrelement nachgeführt und in seine Sperrstellung bewegt.

Vorzugsweise ist das Sperrelement dem Verschlussriegel gegenüberliegend angeordnet. Hierbei sind der Verschlussriegel und das Sperrelement vorzugsweise auf einer gemeinsamen Achse angeordnet. Wenn der Verschlussriegel beispielsweise auf der einen Seite der Einfahröffnung angeordnet ist, so ist das Sperrelement auf der anderen Seite vorgesehen. In diesem Fall liegen die Spitzen von Verschlussriegel und Sperrelement gegenüber.

Vorzugsweise ist das Sperrelement ein Sperrriegel. Ein Sperrriegel hat den Vorteil, dass es ein stabiles mechanisches Bauelement ist, das einem ungewollt ausfahrenden Königszapfen einen ausreichenden mechanischen Widerstand entgegensetzen kann.

Der Sperrriegel ist vorteilhafterweise in der gleichen Richtung verschiebbar wie der Verschlussriegel. Wenn der Verschlussriegel in Offenstellung bewegt wird, wird der Sperrriegel in die Einfahröffnung gefahren und nimmt dort die Position des Verschlussriegels ein. Der Bewegungsablauf wird vereinfacht und der Platzbedarf für das Sperrelement bzw. den Sperrriegel wird gering gehalten.

Der Sperrriegel ist vorzugsweise lösbar am Verschlussriegel befestigt. Der Sperrriegel ist am Verschlussriegel befestigt, wenn dieser in unbefugter Weise bewegt wird. Der Sperrriegel wird vom Verschlussriegel in Sperrstellung gezogen. Der Sperrriegel löst sich vom Verschlussriegel, wenn der Verschlussriegel in befugter Weise betätigt wird. Der Sperrriegel verbleibt dann in seiner Ruhestellung.

Vorzugsweise ist die Spitze des Sperrriegels lösbar an der Spitze des Verschlussriegels befestigt.

Um diese lösbare Befestigung zu schaffen, ist gemäß einer Ausführungsform vorgesehen, dass der Verschlussriegel und/oder der Sperrriegel mindestens einen Magneten aufweist. Die Stärke des oder der Magneten ist so ausgelegt, dass der Verschlussriegel einerseits den Sperrriegel mitschleppen kann und dass andererseits der Sperrriegel sich vom Verschiussriegel lösen kann, wenn der Verschlussriegel in befugter Weise bewegt wird und der Sperrriegel in seiner Ruheposition fixiert ist.

Der Verschlussriegel und das Sperrelement können gemäß einer weiteren Ausführungsform Rastmittel aufweisen, die ineinander greifen und sich im Bedarfsfall auch wieder voneinander lösen lassen.

Als Rastmittel sind vorzugsweise Rastnasen und Rasthaken vorgesehen.

Eine andere Ausführungsform sieht vor, dass das Sperrelement eine erste Federeinrichtung aufweist, die das Sperrelement in der Verschlussstellung des Verschlussriegels gegen den Verschlussriegel drückt. Wenn der Verschlussriegel in unbefugter Weise zurückgezogen wird, folgt der Sperrriegel unmittelbar nach und nimmt die Position des Verschlussriegels in der Einfahröffnung ein.

Das Sperrelement ist vorzugsweise in seiner Ruhestellung festlegbar. Die Festlegung des Sperrelements in der Ruhestellung ist notwendig, damit der Verschlussriegel bei befugter Betätigung sich vom Sperrelement lösen kann.

Die Mittel zur Festlegung und Freigabe des Sperrelementes umfassen vorzugsweise eine erste Betätigungseinrichtung mit Blockiermittel und mit mindestens einem Aktuator. Der Aktuator ist vorzugsweise ein elektrisch, pneumatisch oder hydraulisch betätigter Aktuator.

Als Blockiermittel können ein Blockierstift oder eine Klinke vorgesehen sein.

Vorzugsweise ist der Blockierstift senkrecht zur Bewegungsrichtung des Sperrelementes verschiebbar.

Damit das Blockiermittel das Sperrelement wirksam festlegen kann, ist vorzugsweise mindestens eine erste Ausnehmung vorgesehen, in die das Blockiermittel eingreifen kann.

Um die Betätigungseinrichtung in der gewünschten Weise schalten zu können, ist sie an eine Steuereinrichtung angeschlossen. Die Steuereinrichtung kann eine Eingabestation aufweisen, um z. B. Befehle, Zahlencodes oder dergleichen eingeben zu können. Über die Steuereinrichtung kann die Bedienperson festlegen, ob ein Öffnen des Verschlussriegels in befugter oder in unbefugter Weise erfolgt.

Gemäß einer besonderen Ausführungsform kann die Steuereinrichtung an eine Überwachungseinrichtung angeschlossen sein, z. B. eine Einrichtung zur Überwachung des Verschlusszustandes der Sattelkupplung. Je nach Verschlusszustand kann diese Information für die Schaltung der Sicherungseinrichtung genutzt werden.

Die Überwachungseinrichtung kann auch eine Diebstahlsicherungseinrichtung sein oder diese aufweisen, um das unbefugte Öffnen des Verschlusshakens zu detektieren. Eine solche Diebstahlsicherungseinrichtung kann in herkömmlicher Weise an den Verschlusshaken angreifen und ein unbefugtes Öffnen des Verschlusshakens detektieren. Die Diebstahlsicherungseinrichtung weist daher vorzugsweise eine Einrichtung am Verschlusshaken, z. B. mit einem Blockierstift, auf, die mit einem Anzeige- und/oder Steuergerät im Führerhaus verbunden ist. Es kann sich beispielsweise um eine Diebstahlsicherungseinrichtung handeln, wie sie in der WO 2005/028290 A1 beschrieben wird.

Vorzugsweise ist das Sperrelement in seiner Ruheposition justierbar. Eine Justierung kann notwendig werden, wenn der Verschlussriegel Abnutzungserscheinungen aufweist und der Kontakt zwischen dem Verschlussriegel und dem Sperrelement nicht mehr in der vorgesehenen Weise gegeben ist.

Vorzugsweise ist eine zweite Betätigungseinrichtung mit Blockiermittel und Aktuator zur Festlegung des Verschlussriegels in seiner Verschlussstellung vorgesehen. Diese zweite Betätigungseinrichtung kann beispielsweise Bestandteil einer separaten Diebstahlsicherungseinrichtung sein oder sie kann ebenfalls an die Steuereinrichtung angeschlossen sein. Es wird dadurch möglich, über die Steuereinrichtung nicht nur die Sicherungseinrichtung zu aktivieren, sondern auch als weitere Maßnahme den Verschlussriegel zu blockieren.

Gemäß einer weiteren Ausführungsform ist das Sperrelement beabstandet zur Verschlusseinrichtung und dem Fixierelement angeordnet. Hierbei wirkt das Sperrelement nicht mit dem Verschlussriegel zusammen. Diese Ausführungsform hat den Vorteil, dass die Funktion des Verschlussmechanismus nicht durch die Sicherungseinrichtung beeinfiusst wird. Alle Funktionen des Verschlusses bleiben erhalten.

Vorzugsweise ist das Sperrelement innerhalb der zweiten Hälfte der Einfahröffnung angeordnet. Diese zweite Hälfte der Einfahröffnung bezeichnet in Einfahrrichtung die letzte Hälfte der Einfahröfifnung. In diesem Bereich hat sich die Einfahröffnung bereits so weit verengt, dass ein nicht allzu großes Sperrelement ausreicht, um die Einfahröffnung zu blockieren.

Vorzugsweise ist das Sperrelement mittels einer zweiten Federeinrichtung in Sperrstellung gehalten und ist von einem ein- oder ausfahrenden Königszapfen gegen die Kraft der zweiten Federeinrichtung zur Freigabe der Einfahröffnung bewegbar. Das Sperrelement ist in der Sperrstellung festlegbar.

In dieser Ausführungsform ragt das Sperrelement ständig in die Einfahröffnung, so dass Sperrstellung und Ruhestellung übereinstimmen. Eine Sperrung der Einfahröffnung wird dadurch erreicht, dass in dieser Sperrstellung das Sperrelement auch festgelegt wird und von einem ausfahrenden Königszapfen nicht bewegt werden kann. Auf diese Weise wird die Sicherung bei unbefugter Öffnung des Verschlusssystems des Königszapfens sichergestellt.

Auch bei dieser Ausführungsform ist es von Vorteil, wenn das Sperrelement ein Sperrriegel ist. Dieser Sperrriegel ist vorzugsweise senkrecht zur Längsachse der Einfahröffnung bewegbar angeordnet.

Zur Festlegung und Freigabe des Sperrelementes ist wie bei der ersten Ausführungsform eine Betätigungseinrichtung vorgesehen, die Blockiermittel und mindestens einen Aktuator umfasst. Diese Betätigungseinrichtung ist vorzugsweise eine Blockiereinrichtung. Diese Blockiereinrichtung ist vorzugsweise derart ausgebildet, dass nach dem Einfahren des Königszapfens das Sperrelement automatisch in seiner Sperrstellung blockiert wird.

Die Blockiereinrichtung umfasst ein Blockierstück und eine dritte Federeinrichtung, die das Blockierstück in Blockierstellung hält.

Vorzugsweise weist das Blockierstück einen Aktuator auf, der gegen die Kraft der dritten Federeinrichtung das Blockierstück aus der Blockierstellung in eine Freigabestellung bewegt.

Vorzugsweise weist das Sperrelement eine Klinke auf, die mit dem Blockierstück zusammenwirkt. Diese Klinke fixiert das Blockierstück gegen die Kraft der dritten Federeinrichtung. Wenn das Sperrelement durch einen einfahrenden Königszapfen gegen die Kraft der zweiten Federeinrichtung zurückbewegt wird, wird das Blockierstück, das über die dritte Federeinrichtung vorgespannt ist, mittels der Klinke gelöst, so dass das Blockierstück gegen das Sperrelement gedrückt werden kann. Das Blockierstück wird vorzugsweise senkrecht zur Bewegungsrichtung des Sperrelements bewegt.

Es ist von Vorteil, wenn der Aktuator der Blockiereinrichtung ebenfalls an die Steuereinrichtung angeschlossen ist, um den Aktuator in der gewünschten Weise ansteuern zu können.

Vorzugsweise ist mindestens eine der Betätigungseinrichtungen von außen sichtbar an der Sattelkupplung angeordnet. Ergänzend kann die Betätigungseinrichtung eine optische und/oder akustische Einrichtung aufweisen. Diese Maßnahmen sollen potentielle Diebe auf das Vorhandensein einer Sicherungseinrichtung hinweisen und somit von einem Diebstahl des Aufliegers abhalten.

Die Betätigungseinrichtung oder die Betätigungseinrichtungen sind jeweils in einem Gehäuse angeordnet, wobei das Gehäuse gemäß einer Ausführungsform über die Oberseite der Sattelkupplungsplatte angeschraubt ist. Ein Lösen der Schrauben ist nicht möglich, wenn der Auflieger angekuppelt ist.

Das Gehäuse kann auch an der Sattelkupplungsplatte angeschweißt oder vernietet sein. Als Material für das Gehäuse ist vorzugsweise Guss, Stahlguss, hochfestes Leichtmetall oder hochfester Kunststoff vorgesehen, um zu verhindern, dass das Gehäuse durch Gewalteinwirkung zerstört werden kann.

Als Aktuatoren sind insbesondere Spulen, Zylinder, Stellmotoren oder hydraulische Antriebe geeignet.

Beispielhafte Ausführungsformen der Erfindung werden nachfolgend anhand der Zeichnungen näher erläutert. Es zeigen:
- Figur 1: eine schematische Darstellung eines Zugfahrzeuges,
- Figur 2: die Unteransicht einer Sattelkupplung,
- Figuren 3 bis 9: vergrößerte Ausschnitte der Unteransicht der in Figur 2 gezeigten Sattelkupplung zur Erläuterung verschiedener Stellungen von Verschlussriegel und Sperrelement sowie zur Erläuterung verschiedener Ausführungsformen,
- Figur 10: eine schematische Darstellung der Unteransicht einer Sattelkupplung gemäß einer weiteren Ausführungsform,
- Figuren 11 bis 14: vergrößerte Darstellungen der Sicherungseinrichtung in vier verschiedenen Stellungen.

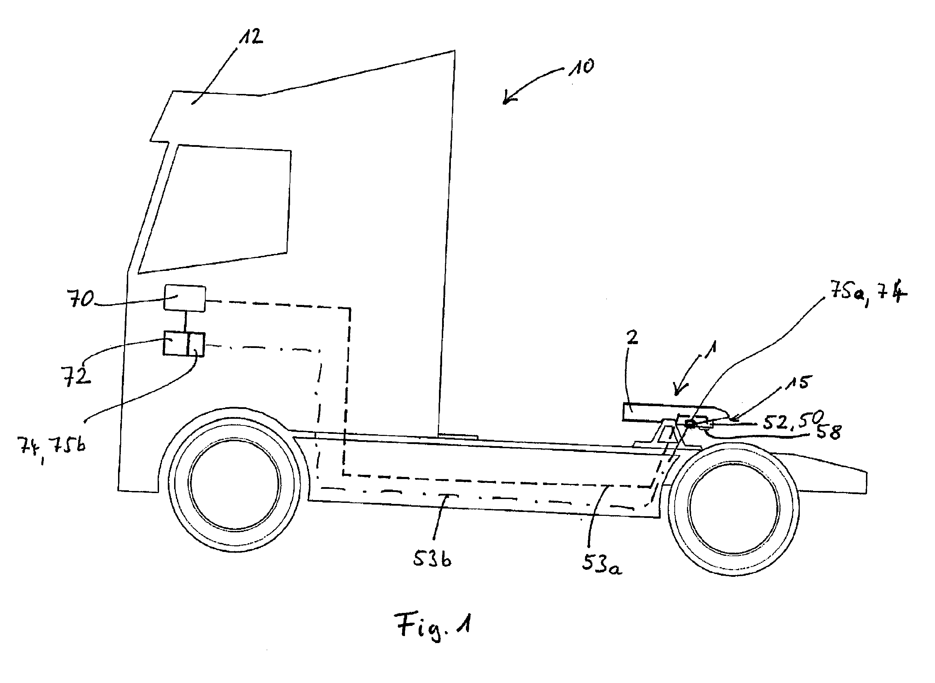

In der Figur 1 ist ein Zugfahrzeug 10 dargestellt, das eine Sattelkupplung 1 trägt. Die Sattelkupplung 1 ist mit einer zusätzlichen Sicherungseinrichtung ausgestattet, von der in Figur 1 lediglich eine erste Betätigungseinrichtung 50 dargestellt ist, die über ein elektrische Leitung 53a mit einer Steuereinrichtung 70 im Fahrerhaus 12 verbunden ist.

Die Betätigungseinrichtung 50 ist derart an der Unterseite der Sattelkupplungsplatte 2 angebracht, dass sie von außen sichtbar ist. Die zusätzliche optische Einrichtung 58 kann beispielsweise blinken, um zu signalisieren, dass die Sicherungseinrichtung 15 aktiv ist. Durch diese Maßnahmen sollen potentielle Diebe von vornherein abgeschreckt werden, den Auflieger (hier nicht dargestellt) vom Zugfahrzeug 10 abzukoppeln.

Über die Steuereinrichtung 70 kann die Sicherungseinrichtung 15 ein- und ausgeschaltet werden. Hierzu kann ein entsprechendes Eingabegerät, z. B. ein Codeeingabegerät integriert sein.

Die Steuereinrichtung 70 kann auch an eine Überwachungseinrichtung 72 angeschlossen sein, die mit dem Verschlusssystem der Sattelkupplung über eine elektrische Leitung 53b verbunden ist (s. strichpunktierte Linie) und den Verriegelungszustand der Sattelkupplung feststellt. Es kann sich hierbei um eine Diebstahlsicherungseinrichtung 74 mit einer Einrichtung 75a am Verschlusshaken und mit einem Anzeige- und/oder Steuergerät 75b handeln, das beispielsweise die Überwachungseinrichtung 72 bildet oder in diese integriert ist. Diese Information kann genutzt werden, um über die Steuereinrichtung 70 das Sicherungssystem 15 in der entsprechenden vorgesehenen Weise zu aktivieren oder zu deaktivieren.

Eine solche Überwachungseinrichtung kann auch eine Diebstahlsicherungseinrichtung sein oder eine Diebstahlsicherungseinrichtung aufweisen, die ebenfalls am Verschlusssystem der Sattelkupplung angreift und bei Scharfschaltung das Verschlusssystem der Sattelkupplung blockiert. Auch diese Informationen können zur Aktivierung bzw. Deaktivierung der Sicherungseinrichtung 15 genutzt werden.

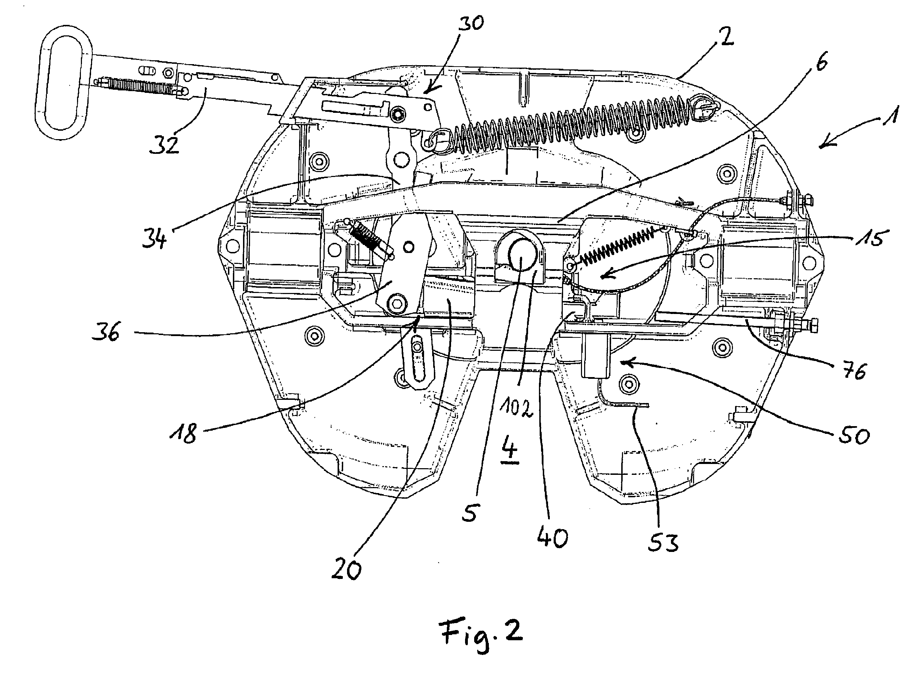

In der Figur 2 ist die Unteransicht der Sattelkupplung 1 dargestellt. Zum Einfahren eines Königszapfens 5 weist die Sattelkupplungsplatte 2 eine Einfahröffnung 4 auf.

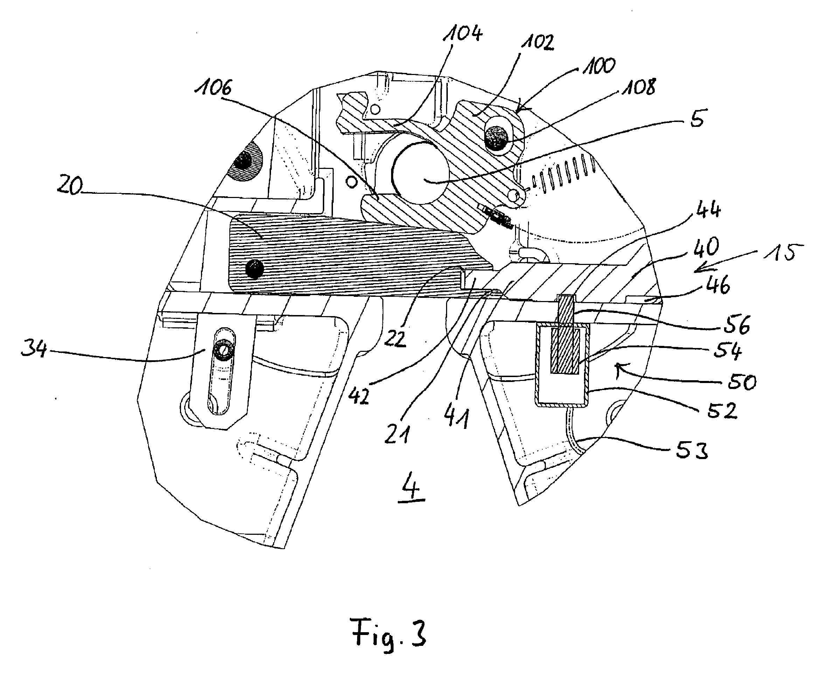

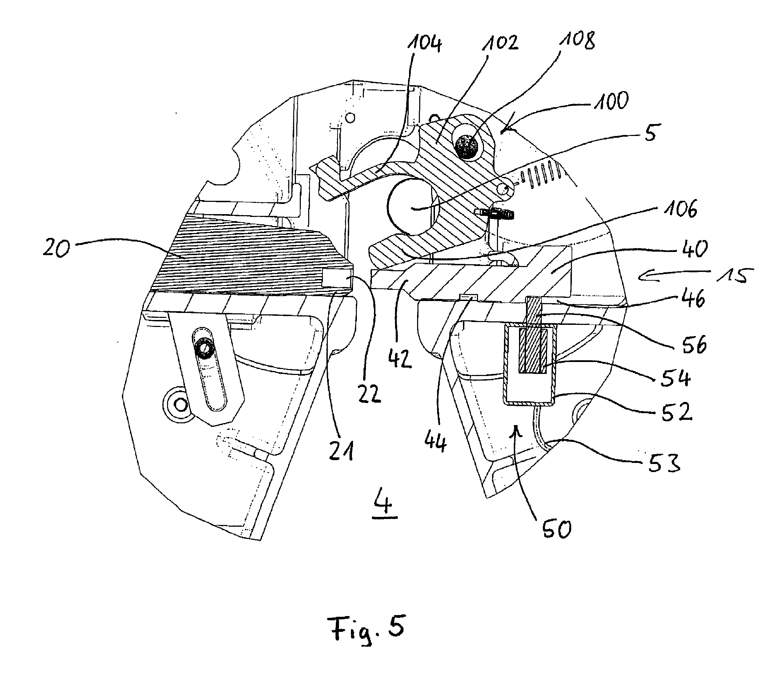

Die Sattelkupplung 1 verfügt über ein Verschlusssystem 18, das eine Verschlusseinrichtung 100 in Gestalt eines Verschlusshakens 102 (s. auch Figur 3), einen Verschlussriegel 20 und eine Hebelage 30 mit einer Zugstange 32 sowie mit Hebeln 34 und 36 umfasst. In seiner Verschlussstellung umgreift der Verschlusshaken 102 den eingefahrenen Königszapfen 5. Durch den Abdeckrahmen 6 sind Teile des Verschlusssystems verdeckt, so dass das Zusammenwirken der Einzelkomponenten des Verschlusssystems nicht erkennbar ist. Die Position der Einzelkomponenten entspricht der in Figur 5.

Um den Verschlussriegel 20 in seine Verschlussstellung zu bewegen, wird die Zugstange 32 verschoben, wobei die Bewegung über Hebel 34 und 36 auf den Verschlussriegel 20 übertragen wird.

Gegenüber dem Verschlussriegel 20 ist ein Sperrelement 40 in Gestalt eines Sperrriegels und als Bestandteil der Sicherungseinrichtung 15 angeordnet, deren Funktionsweise im Zusammenhang mit den Figuren 3 bis 9 im Einzelnen erläutert wird.

Hinter dem Sperrriegel 40 ist eine Justierschraube 76 dargestellt, mit der der Sperrriegel in seine Ruheposition justiert werden kann.

In der Figur 3 ist eine vergrößerte Detailansicht dargestellt, die das Zusammenwirken von Verschlussriegel 20 und Sperrriegel 40 zeigt.

Der Verschlusshaken 102, der die Verschlusseinrichtung 100 bildet, ist um einen Bolzen 108 schwenkbar und weist zwei Schenkel 104 und 106 auf, die den Königszapfen 5 in der Verschlussstellung umgreifen. Um den Verschlusshaken 102 in seiner Verschlussstellung zu fixieren, ist der Verschlussriegel 20 in Pfeilrichtung vor den Verschlusshaken verschoben, so dass der Verschlussriegel 20 in der Einfahröffnung 4 zu liegen kommt. Hierbei liegt der Schenkel 106 des Verschlusshakens 102 am Verschlussriegel 20 an, so dass der Verschlusshaken 102 am Verdrehen gehindert wird.

Dem Verschlussriegel 20 liegt auf der anderen Seite der Sperrriegel 40 gegenüber. In der hier gezeigten Ausführungsform befindet sich der Verschlussriegel 20 auf der einen Seite der Einfahröffnung 4 und der Sperrriegel 40 auf der anderen Seite der Einfahröffnung 4. Der Sperrriegel 40 besitzt an seinem vorderen Ende 41 ein Verbindungselement 42, das in eine entsprechende Ausnehmung 22 am vorderen Ende 21 des Verschlussriegels 20 klemmend eingreift. Über das Verbindungselement 42 und die erste Ausnehmung 22 wird eine lösbare Verbindung des Sperrriegels 40 mit dem Verschlussriegel 20 geschaffen.

Der Sperrriegel 40 verfügt an einer seiner beiden Längsseiten über zwei Ausnehmungen 44 und 46. In der hier gezeigten Ruhestellung des Sperrriegels 40 greift in die erste Ausnehmung 44 ein Blockierstift 56 einer ersten Betätigungseinrichtung 50. Dieser Blockierstift 56 wird mittels eines Aktuators 54 bewegt. Dieser Aktuator 54 ist in einem Gehäuse 52 angeordnet. Der Aktuator 54 ist über eine elektrische Verbindungsleitung 53 mit der Steuereinrichtung 70 verbunden (s. Figur 1).

Diese Betätigungseinrichtung 50 ist derart angeordnet, dass der Blockierstift 56 sich senkrecht zur Bewegungsrichtung des Sperrriegels 40 bewegt. In der Ruhestellung des Sperrriegels 40 greift der Blockierstift 56 in die erste Ausnehmung 44 ein und blockiert damit den Sperrriegel 40.

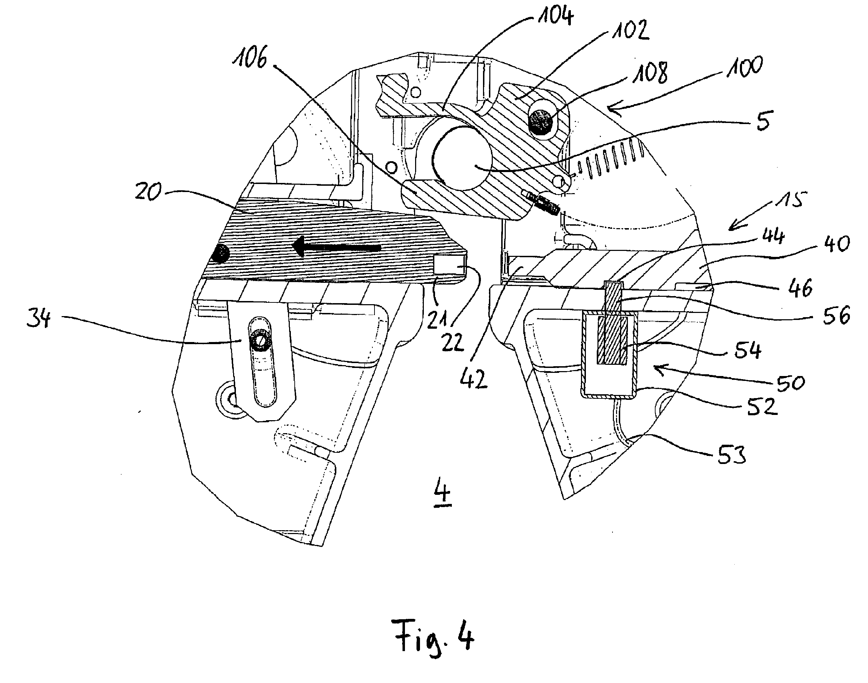

Wenn der Verschlussriegel 20 befugterweise zum Öffnen des Verschlusshakens in Pfeilrichtung nach links bewegt wird, wie dies in der Figur 4 dargestellt ist, löst sich der Verschlussriegel 20 von dem Sperrriegel 40 und gibt somit die Einfahröffnung 4 frei. Der Verschlusshaken kann in Offenstellung geschwenkt werden, so dass der Königszapfen 5 ausfahren kann.

Wenn jedoch der Verschlussriegel 20 in unbefugter Weise betätigt wird, ist die Betätigungseinrichtung 50 derart geschaltet, dass der Blockierstift 56 nicht in die erste Ausnehmung 42 eingreift. Der Blockierstift 56 befindet sich in einer zurückgezogenen Position und wird in dieser Position gehalten. Der Sperrriegel 40 ist damit frei beweglich und wird von dem Verschlussriegel 20 mitgeschleppt, so dass der Sperrriegel 40 in Sperrstellung gezogen wird. In dieser Sperrstellung befindet sich das vordere Ende mit dem Verbindungselement 42 in der Einfahröffnung 4 der Sattelkupplung, wie dies in Figur 5 zu sehen ist. Erst in dieser Stellung löst sich der Verschlussriegel 20 von dem Sperrriegel 40.

Damit der Sperrriegel 40 durch ein Zurückschieben des Verschlussriegels 20 nicht wieder in seine Ruhestellung zurückgeschoben werden kann, ist der Blockierstift 56 ausgefahren, so dass dieser in die zweite Ausnehmung 46 eingreift. Damit wird der Sperrriegel 40 in seiner Sperrstellung festgelegt. In dieser Sperrstellung kann der Verschlusshaken nur begrenzt bewegt werden, wobei der Verschlusshaken den Königszapfen nicht frei gibt. Es wird damit sichergestellt, dass bei einer unbefugten Betätigung des Verschlussriegels 20 keine Abkopplung von Auflieger und Zugfahrzeug 10 stattfinden kann. Dies wird durch den in Sperrstellung befindlichen Sperrriegel 40 gewährleistet.

Erst durch eine Freigabe über die Steuereinrichtung 70 wird der Blockierstift 56 aus der Ausnehmung 46 zurückgezogen, so dass der Sperrriegel 40 wieder in seine Ruhestellung gemäß der Figur 4 zurückgeschoben werden kann.

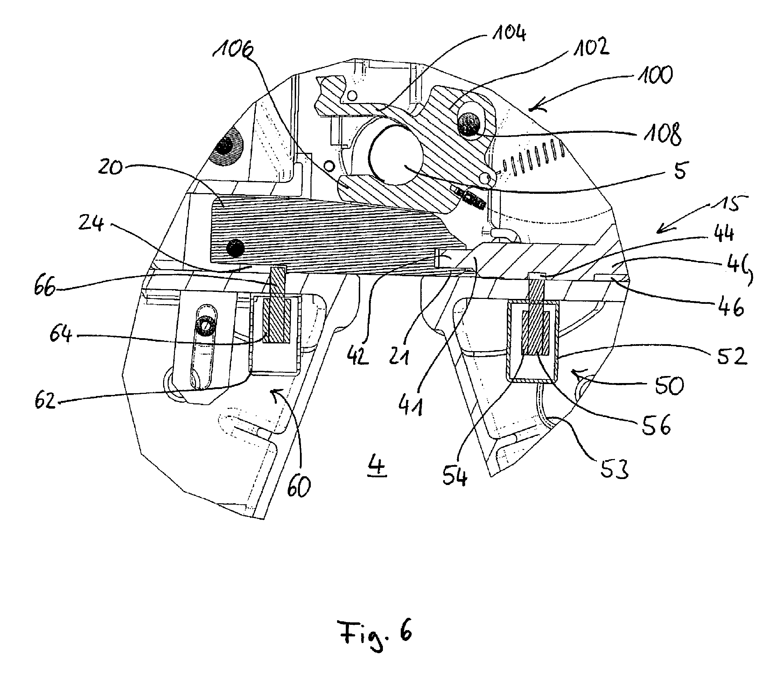

In der Figur 6 ist eine weitere Ausführungsform dargestellt, die eine zweite Betätigungseinrichtung 60 umfasst, die in einem Gehäuse 62 einen Aktuator 64 mit einem Blockierstift 66 aufweist. Über den Blockierstift 66 wird eine Blockade des Verschlussriegels 20 ermöglicht. Der Blockierstift 66 ragt in eine entsprechende Ausnehmung 24 des Verschlussriegels 20, wenn dieser sich in der in Figur 6 gezeigten Verschlussstellung befindet. Sollte ein gewaltsames Öffnen des Verschlussriegels 20 stattfinden, wird zunächst einmal der Verschlussriegel 20 in seiner Lage fixiert. Bei einem gewaltsamen Öffnen kann durchaus der Blockierstift 66 beschädigt werden, was über eine entsprechende Einrichtung detektiert wird. In diesem Fall wird ein entsprechendes Signal an die Steuereinrichtung 70 gegeben, die daraufhin den Blockierstift 56 zurückzieht, so dass der Sperrriegel 40 freigegeben wird und frei beweglich ist. Es wird dadurch möglich, dass bei einem Verschieben des Verschlussriegels 20, wie dies im Zusammenhang mit den Figuren 3 bis 5 beschrieben worden ist, der Sperrriegel 40 in seine Verschlussstellung bewegt werden kann.

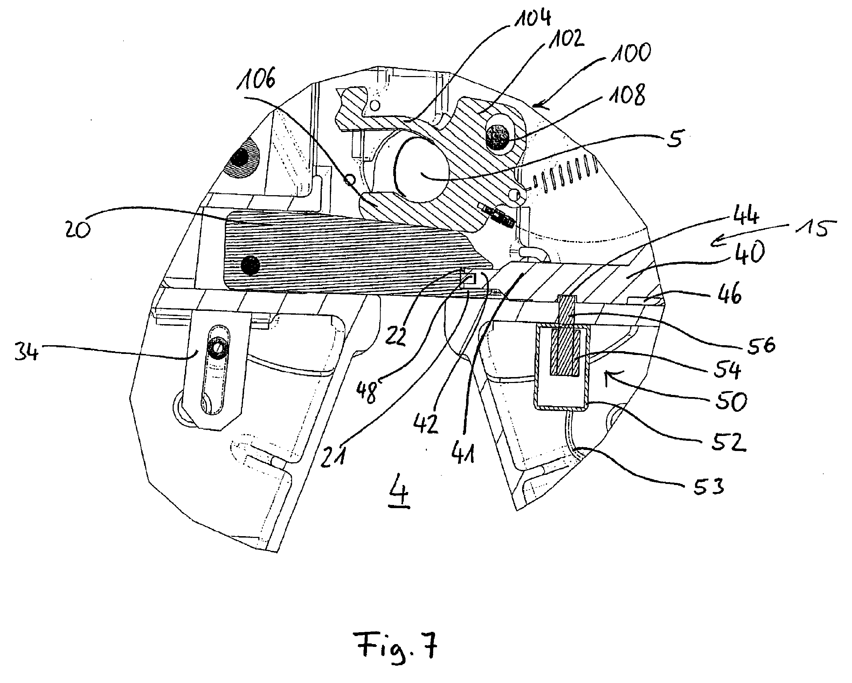

In der Figur 7 ist eine besondere Ausführungsform der lösbaren Verbindung von Sperrriegel 40 und Verschlussriegel 20 dargestellt. Im Verbindungselement 42 des Sperrriegels 40 befindet sich ein Magnet 48, der geringfügig gegenüber dem Verbindungselement 42 vorsteht und mit dem Verschlussriegel 20 zusammenwirkt.

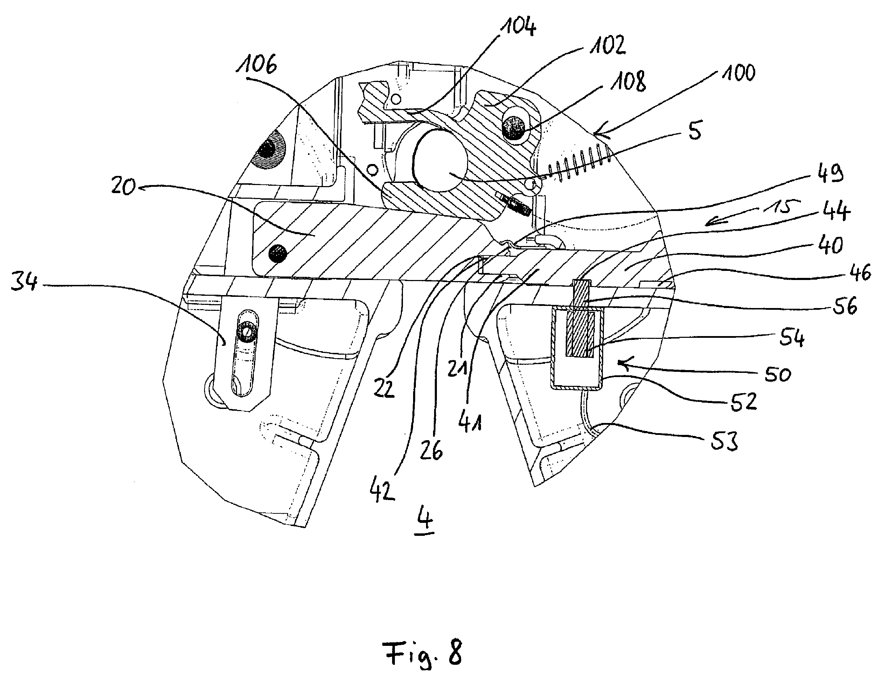

Eine weitere Ausführungsform ist in der Figur 8 dargestellt, wobei der Verschlussriegel 20 eine Rastnase 26 aufweist, die mit einem Rasthaken 49 des Sperrriegels 40 zusammenwirkt. Die beiden Rastmittel sind derart ausgelegt, dass bei einer Fixierung des Sperrriegels 40 sich der Verschlussriegel 20 von dem Sperrriegel 40 lösen kann. Gleichzeitig sind die Rastmittel so ausgelegt, dass eine Mitnahme des Sperrriegels 40 ermöglicht wird, wenn der Sperrriegel 40 freigegeben ist und der Verschlussriegel in unbefugter Weise in seine Offenstellung bewegt wird.

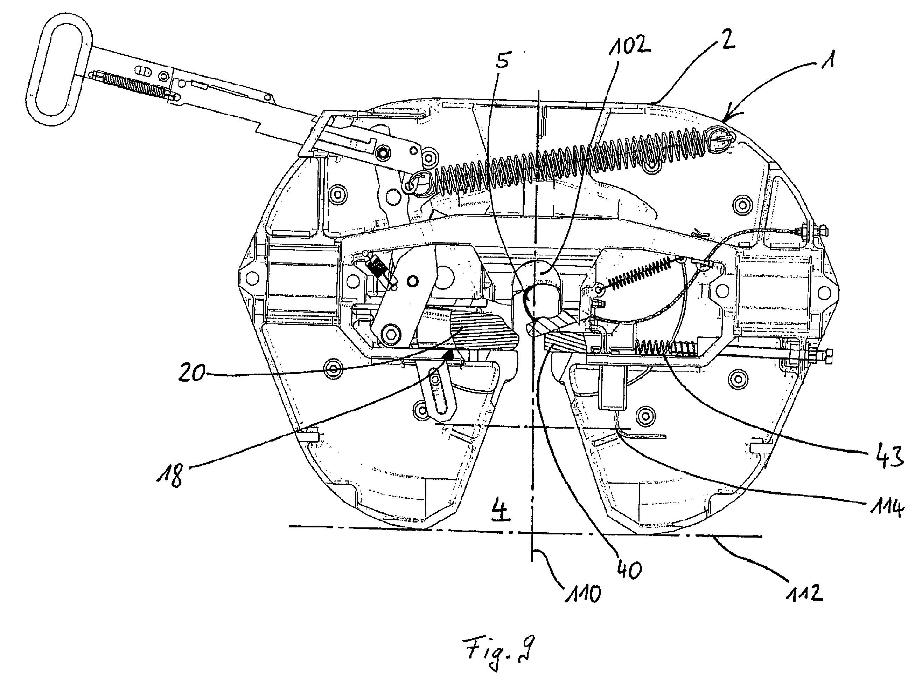

In der Figur 9 ist eine weitere Ausführungsform dargestellt, in der der Sperrriegel 40 mittels einer Federeinrichtung 43 betätigt wird. In der in Figur 9 dargestellten Stellung befindet sich der Verschlussriegel 20 in seiner Offenstellung, so dass der Verschlusshaken 102 sich in seine Offenstellung bewegen kann. Dadurch, dass der Sperrriegel 40 durch die Federeinrichtung 43, die an seiner Rückseite angreift, in die Einfahröffnung 4 geschoben wird, wird der Verschlusshaken 102 blockiert, so dass er sich nicht vollständig öffnen kann.

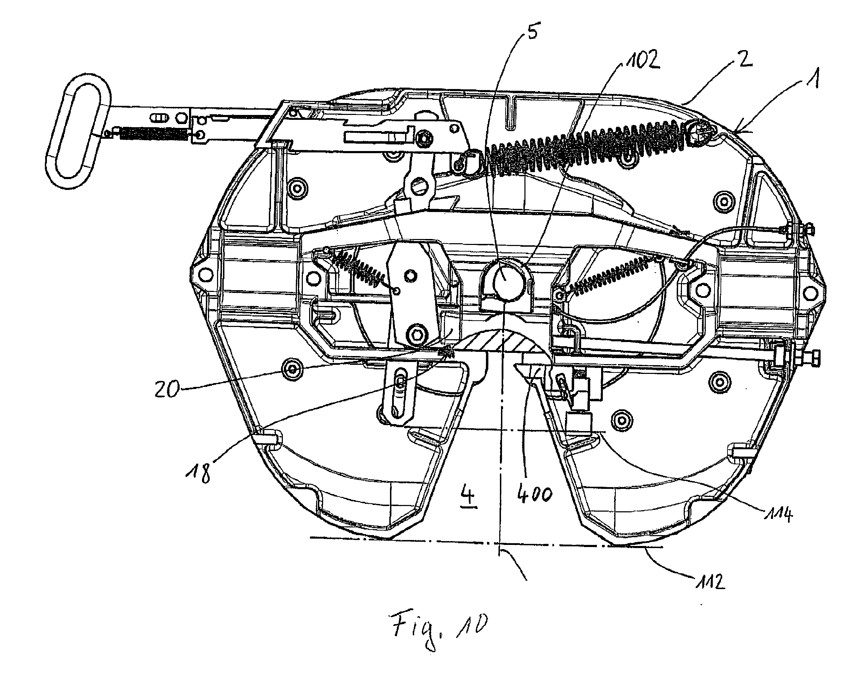

In der Figur 10 ist eine weitere Ausführungsform dargestellt, in der ein Sperrriegel 400 beabstandet zu dem Verschlusssystem 18 der Sattelkupplung 1 angeordnet ist. Die Einfahröffnung 4 erstreckt sich von der äußeren Begrenzungslinie 112 bis zum Verschlusssystem 18, wobei die Linie 114 die Mitte markiert. Der Sperrriegel 400 befindet sich in Einfahrrichtung in der hinteren Hälfte zwischen der mittleren Linie 114 und dem Verschlusssystem 18. Der Sperrriegel 400 befindet sich seitlich der Einfahröffnung 4 und ist verschiebbar angeordnet, so dass er ebenfalls senkrecht zur Längsachse 110 der Einfahröffnung 4 verschiebbar ist.

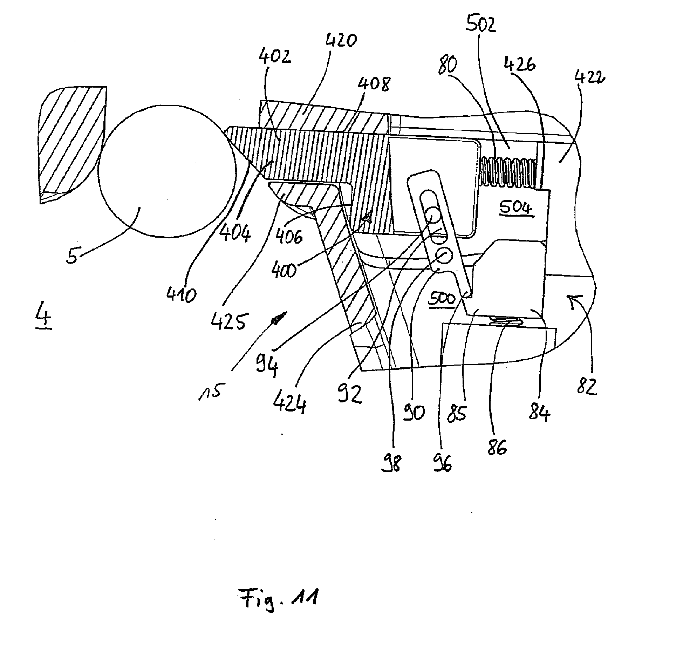

Der Sperrriegel 400 (siehe Figur 11) besitzt einen Rücksprung, so dass eine Widerlagerfläche 406 gebildet wird, die an der Seitenwand 424 der Sattelkupplungsplatte 2 anliegt.

Der Sperrriegel 400 wird an seiner Längsseite 408 von einer Führungsrippe 420 und an der gegenüberliegenden Seite 409 von einer Rippe 425 der Seitenwand 424 geführt und befindet sich in einer Kammer 500, die seitlich eine weitere kleinere Kammer 502 aufweist, in der eine zweite Federeinrichtung 80 angeordnet ist.

Diese Federeinrichtung 80 stützt sich an einer Führungsrippe 422 ab und drückt den Sperrriegel 400 in die in Figur 11 gezeigte Position.

Der Sperrriegel 400 verfügt ferner über eine Klinke 90, die an ihrer Oberseite einen Bolzen 98 aufweist, der in der Sattelkupplung drehbar gelagert ist. Der Sperrriegel 400 verfügt über einen Bolzen 94, der in ein Langloch 92 der Klinke 90 eingreift, so dass die Klinke in ihrer Längsrichtung verschiebbar ist.

Das vordere Ende der Klinke 90 besitzt eine Klinkenspitze 96, die an einer Nase 85 eines Blockierstücks 84 einer Blockiereinrichtung 82 angreift. Das Blockierstück 84 ist ebenfalls beweglich angeordnet. Die Bewegungsrichtung des Blockierstücks 84 ist senkrecht zu der Bewegungsrichtung des Sperrriegels 400.

Das Blockierstück 84 besitzt eine dritte Federeinrichtung 86, die das Blockierstück 84 in Richtung Sperrriegel 400 bewegt. Durch die Klinke 90 wird das Blockierstück 84 in seiner Offenstellung gehalten, so dass der Sperrriegel 400 beweglich ist und gegen die Kraft der zweiten Federeinrichtung 80 bewegt werden kann.

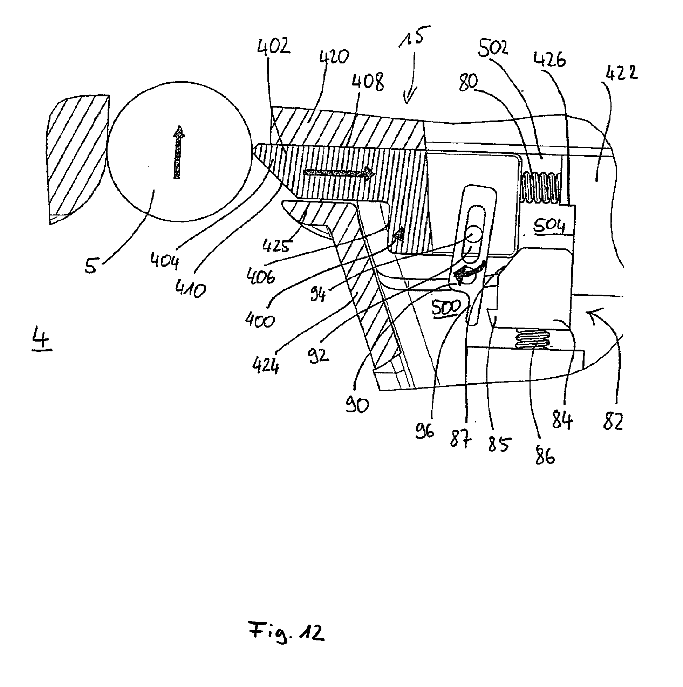

In der Figur 12 ist der Einfahrvorgang des Königzapfens 5 dargestellt. Der Königszapfen 5 greift an der Einfahrschräge 410 der Spitze 404 des Sperrriegels 400 an und bewegt den Sperrriegel 400 in Pfeilrichtung, d. h. in den Innenraum der Kammer 500 gegen die Kraft der zweiten Federeinrichtung 80. Hierbei wird die Klinke 90 vom Bolzen 94 betätigt und um den Bolzen 98 geschwenkt, so dass sich die Klinkenspitze 96 von der Nase 85 des Blockierstücks 84 löst. Dies hat zur Folge, dass das Blockierstück 84 über die dritte Federeinrichtung 86 gegen den Sperrriegel 400 gedrückt wird.

In der in Figur 12 gezeigten Darstellung liegt das Blockierstück 84 mit seiner Schräge 87 an einer Ecke des Sperrriegels 400 an. Sobald der Königszapfen 5 vollständig eingefahren wird, drückt die zweite Federeinrichtung 86 den Sperrriegel 400 in die Einfahröffnung 4, so dass der Sperrriegels 400 seine Sperrstellung einnimmt. Dadurch wird das Blockierstück 84 vom Sperrriegel 400 freigegeben, so dass das Blockierstück 84 in den Freiraum 504 hinter dem Sperrriegel 400 eintauchen kann, bis es am Vorsprung 426 der Führungsrippe 422 anliegt.

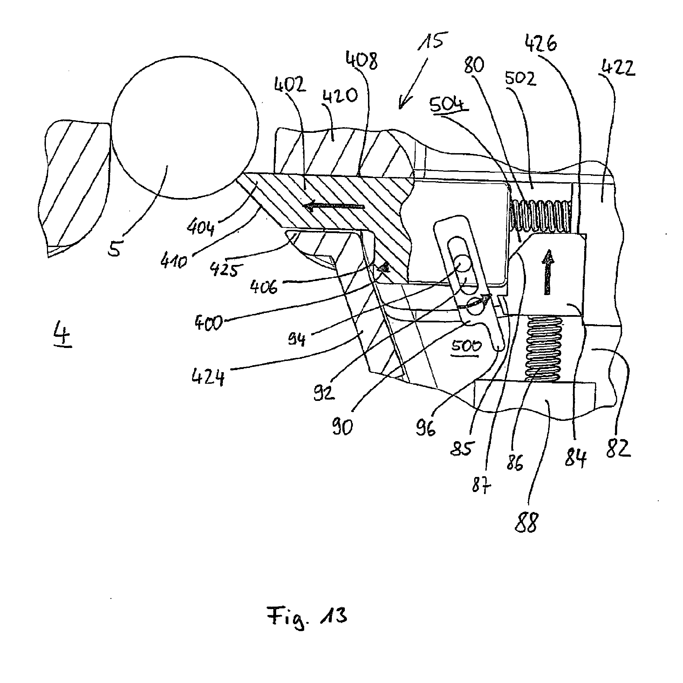

Eine Bewegung des Sperrriegels 400 entgegen der in Figur 13 eingezeichneten Pfeilrichtung ist nicht mehr möglich, weil zwischen der Rippe 422 und dem Sperrriegel 400 das Blockierstück 84 angeordnet ist. Es wird dadurch eine Sicherung gewährleistet, die verhindert, dass der Königszapfen 5 wieder ausgefahren werden kann.

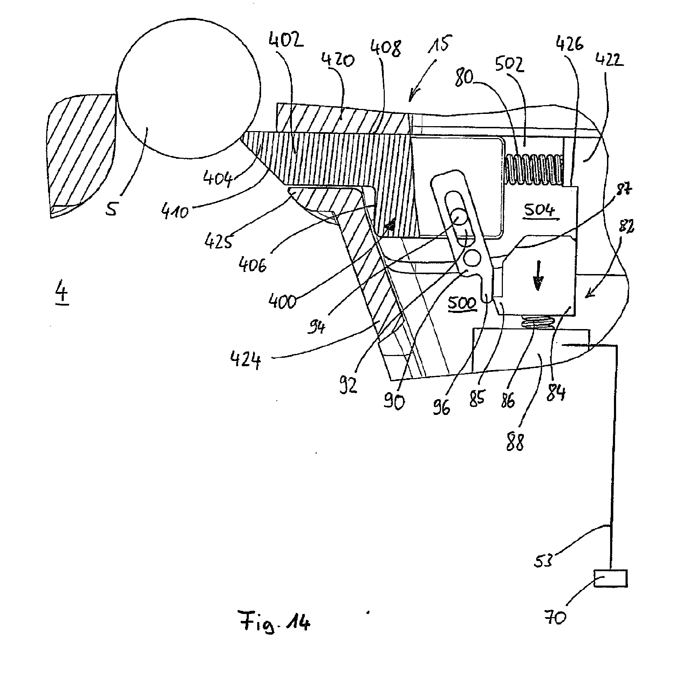

Wenn der Königszapfen freigegeben werden soll, wird das Blockierstück 84, wie dies in der Figur 14 dargestellt ist, mittels eines Aktuators 88 in Pfeilrichtung gegen die Wirkung der dritten Federeinrichtung 86 verschoben, so dass der Sperrriegel 400 wieder frei beweglich ist. Beim Ausfahren des Königszapfens 5 bewegt dieser den Sperrriegel 400 in Pfeilrichtung gegen die Wirkung der zweiten Federeinrichtung 80, wobei gleichzeitig die Klinke 90 derart verschwenkt wird, dass die Klinkenspitze 96 in die Nase 85 des Blockierstücks 84 eingreift und dieses in seiner Ruhestellung blockiert.

### Bezugszeichenliste

- 1: Sattelkupplung
- 2: Sattelkupplungsplatte
- 4: Einfahröffnung
- 5: Königszapfen
- 6: Abdeckrahmen

- 10: Zugfahrzeug
- 12: Fahrerhaus
- 15: Sicherungseinrichtung
- 18: Verschlusssystem

- 20: Verschlussriegel
- 21: vorderes Ende
- 22: erste Ausnehmung
- 24: zweite Ausnehmung
- 26: Rastnase

- 30: Hebelage
- 32: Zugstange
- 34: Hebel
- 36: Hebel

- 40: Sperrelement
- 41: vorderes Ende
- 42: Verbindungselement
- 43: erste Federeinrichtung
- 44: erste Ausnehmung
- 46: zweite Ausnehmung
- 48: Magnet
- 49: Rasthaken

- 50: erste Betätigungseinrichtung
- 52: Gehäuse
- 53a: Leitung
- 53b: Leitung
- 54: Aktuator
- 56: Blockierstift
- 58: optische und/oder akustische Einrichtung

- 60: zweite Betätigungseinrichtung
- 62: Gehäuse
- 64: Aktuator
- 66: Blockierstift

- 70: Steuereinrichtung
- 72: Überwachungseinrichtung
- 74: Diebstahlsicherungseinrichtung
- 75a: Einrichtung am Verschlusshaken
- 75b: Anzeige- und/oder Steuergerät
- 76: Justierschraube

- 80: zweite Federeinrichtung
- 82: Blockiereinrichtung
- 84: Blockierstück
- 85: Nase
- 86: dritte Federeinrichtung
- 87: Schräge
- 88: Aktuator

- 90: Klinke
- 92: Langloch
- 94: Bolzen
- 96: Klinkenspitze
- 98: Bolzen

- 100: Verschlusseinrichtung
- 102: Verschlusshaken
- 104: Schenkel
- 106: Schenkel
- 108: Bolzen
- 110: Längsachse
- 112: äußere Begrenzungslinie
- 114: mittlere Linie

- 400: Sperrelement
- 404: Spitze
- 406: Widerlagerfläche
- 408: Längsseite
- 409: Seite
- 410: Einfahrschräge

- 420: Führungsrippe
- 422: Führungsrippe
- 424: Seitenwand
- 425: Rippe
- 426: Vorsprung

- 500: Kammer
- 502: Kammer
- 504: Freiraum

## Patentansprüche

1. Sattelkupplung (1) mit einer Sattelkupplungsplatte (2), an der eine Einfahröffnung (4) für einen Königszapfen (5) angeordnet ist, mit einer Verschlusseinrichtung (100) für die Festlegung des Königszapfens (5) und mit einem an der Verschlusseinrichtung (100) angreifenden Fixierelement, das von einer Verschlussstellung in eine Offenstellung und umgekehrt bewegbar ist, **dadurch gekennzeichnet,**
**dass** eine Sicherungseinrichtung (15) mit einem Sperrelement (40, 400) vorgesehen ist, das von einer Ruhe- in eine Sperrstellung und umgekehrt bewegbar ist und
**dass** das Sperrelement (40, 400) mindestens in der Sperrstellung in die Einfahröffnung (4) ragt und
**dass** das Sperrelement (40, 400) in Sperrstellung festgelegt ist und damit eine mechanische Sperre bildet, die auch dann das Ausfahren des Königzapfens (5) blockiert, wenn das Fixierelement sich in unbefugter Weise in Offenstellung befindet.

2. Sattelkupplung (1) nach Anspruch 1, **dadurch gekennzeichnet, dass** das Fixierelement ein Verschlussriegel (20) ist und dass das Sperrelement (40) mit einem Verschlussriegel (20) zusammenwirkt.

3. Sattelkupplung nach Anspruch 2, **dadurch gekennzeichnet, dass** das Sperrelement (40) dem Verschlussriegel (20) gegenüberliegend angeordnet ist.

4. Sattelkupplung nach einem der Ansprüche 1 bis 3, **dadurch gekennzeichnet, dass** das Sperrelement (40) ein Sperrriegel ist.

5. Sattelkupplung nach Anspruch 4, **dadurch gekennzeichnet, dass** der Sperrriegel in der gleichen Richtung verschiebbar ist wie der Verschlussriegel (20).

6. Sattelkupplung nach einem der Ansprüche 4 oder 5, **dadurch gekennzeichnet, dass** der Sperrriegel lösbar am Verschlussriegel (20) befestigt ist.

7. Sattelkupplung nach einem der Ansprüche 2 bis 6, **dadurch gekennzeichnet, dass** das Sperrelement (40) eine erste Federeinrichtung (43) aufweist, die das Sperrelement (40) in der Verschlussstellung des Verschlussriegels (20) gegen den Verschlussriegel (20) drückt.

8. Sattelkupplung nach einem der Ansprüche 1 bis 7, **dadurch gekennzeichnet, dass** das Sperrelement (40, 400) in der Ruhestellung festlegbar ist.

9. Sattelkupplung nach einem der Ansprüche 1 bis 8, **dadurch gekennzeichnet, dass** Mittel zur Festlegung und Freigabe des Sperrelements (40, 400) vorgesehen sind, die eine erste Betätigungseinrichtung (50) mit Blockiermittel und mit mindestens einem Aktuator (54) umfassen.

10. Sattelkupplung nach einem der Ansprüche 9, **dadurch gekennzeichnet, dass** das Sperrelement (40) mindestens eine erste Ausnehmung (44) für den Eingriff des Blockiermittels aufweist.

11. Sattelkupplung nach einem der Ansprüche 9 bis 10, **dadurch gekennzeichnet, dass** die erste Betätigungseinrichtung (50) an eine Steuereinrichtung (70) angeschlossen ist.

12. Sattelkupplung nach einem der Ansprüche 2 bis 11, **dadurch gekennzeichnet, dass** eine zweite Betätigungseinrichtung (60) mit Blockiermittel und Aktuator (64) zur Festlegung des Verschlussriegels (20) in seiner Verschlussstellung vorgesehen ist.

13. Sattelkupplung nach Anspruch 1, **dadurch gekennzeichnet, dass** das Sperrelement (400) beabstandet zur Verschlusseinrichtung (100) angeordnet ist.

14. Sattelkupplung nach Anspruch 13, **dadurch gekennzeichnet, dass** das Sperrelement (400) innerhalb der zweiten Hälfte der Einfahröffnung (4) angeordnet ist, wobei die zweite Hälfte der Einfahröffnung (4) die in Einfahrrichtung des Königszapfens (5) hintere Hälfte der Einfahröffnung (4) bezeichnet.

15. Sattelkupplung nach Anspruch 13 oder 14, **dadurch gekennzeichnet, dass** das Sperrelement (400) mittels einer zweiten Federeinrichtung (80) in der Sperrstellung gehalten ist und von einem ein- oder ausfahrenden Königszapfen (5) gegen die Kraft der zweiten Federeinrichtung (80) zur Freigabe der Einfahröffnung (4) bewegbar ist, und dass das Sperrelement (400) in der Sperrstellung festlegbar ist.

16. Sattelkupplung nach einem der Ansprüche 13 bis 15, **dadurch gekennzeichnet, dass** das Sperrelement (400) ein Sperrriegel ist, der senkrecht zur Längsachse der Einfahröffnung (4) bewegbar angeordnet ist.

17. Sattelkupplung nach einem der Ansprüche 13 bis 16, **dadurch gekennzeichnet, dass** eine Blockiereinrichtung (82) vorgesehen ist, die das Sperrelement (400) in seiner Sperrstellung blockiert.

18. Sattelkupplung nach einem der Ansprüche 9 bis 17, **dadurch gekennzeichnet, dass** mindestens eine Betätigungseinrichtung (50, 60) von außen sichtbar an der Sattelkupplung (1) angeordnet ist.

19. Sattelkupplung nach Anspruch 18, **dadurch gekennzeichnet, dass** die Betätigungseinrichtung (50, 60) eine optische und/oder akustische Einrichtung (58) aufweist.

20. Sattelkupplung nach einem der Ansprüche 9 bis 19, **dadurch gekennzeichnet, dass** die Betätigungseinrichtung (50, 80) in einem Gehäuse (52, 62) angeordnet ist.

## Claims

1. Fifth-wheel coupling (1) having a fifth-wheel coupling plate (2) on which there is arranged an entry opening (4) for a king-pin (5), having a locking device (100) for fixing the king-pin (5), and having a fixing element which engages the locking device (100) and is movable from a locking position into an open position and *vice versa,* **characterised in that**
there is provided a security device (15) having a blocking element (40, 400) which is movable from a rest position into a blocking position and *vice versa,* and
**in that** the blocking element (40, 400) projects into the entry opening (4) at least in the blocking position, and
**in that** the blocking element (40, 400) is fixed in the blocking position and thereby forms a mechanical blocking means which stops the king-pin (5) from moving out even if the fixing element is in the open position in an unauthorised manner.

2. Fifth-wheel coupling (1) according to claim 1, **characterised in that** the fixing element is a locking latch (20) and **in that** the blocking element (40) cooperates with a locking latch (20).

3. Fifth-wheel coupling according to claim 2, **characterised in that** the blocking element (40) is arranged opposite the locking latch (20).

4. Fifth-wheel coupling according to any one of claims 1 to 3, **characterised in that** the blocking element (40) is a blocking latch.

5. Fifth-wheel coupling according to claim 4, **characterised in that** the blocking latch is displaceable in the same direction as the locking latch (20).

6. Fifth-wheel coupling according to either claim 4 or claim 5, **characterised in that** the blocking latch is releasably fastened to the locking latch (20).

7. Fifth-wheel coupling according to any one of claims 2 to 6, **characterised in that** the blocking element (40) has a first spring device (43) which presses the blocking element (40) against the locking latch (20) in the locking position of the locking latch (20).

8. Fifth-wheel coupling according to any one of claims 1 to 7, **characterised in that** the blocking element (40, 400) can be fixed in the rest position.

9. Fifth-wheel coupling according to any one of claims 1 to 8, **characterised in that** there are provided means for fixing and releasing the blocking element (40, 400), which means comprise a first operating device (50) having disabling means and having at least one actuator (54).

10. Fifth-wheel coupling according to claim 9, **characterised in that** the blocking element (40) has at least a first recess (44) for the engagement of the disabling means.

11. Fifth-wheel coupling according to either claim 9 or claim 10, **characterised in that** the first operating device (50) is connected to a control device (70).

12. Fifth-wheel coupling according to any one of claims 2 to 11, **characterised in that** there is provided a second operating device (60) having disabling means and an actuator (64) for fixing the locking latch (20) in its locking position.

13. Fifth-wheel coupling according to claim 1, **characterised in that** the blocking element (400) is arranged at a distance from the locking device (100).

14. Fifth-wheel coupling according to claim 13, **characterised in that** the blocking element (400) is arranged within the second half of the entry opening (4), the second half of the entry opening (4) denotes the rear half of the entry opening (4) in the direction of entry of the king-pin (5).

15. Fifth-wheel coupling according to claim 13 or 14, **characterised in that** the blocking element (400) is held in the blocking position by means of a second spring device (80) and is movable against the force of the second spring device (80) by a king-pin (5) moving in or out, in order to free the entry opening (4), and **in that** the blocking element (400) can be fixed in the blocking position.

16. Fifth-wheel coupling according to any one of claims 13 to 15, **characterised in that** the blocking element (400) is a blocking latch which is arranged to be movable perpendicularly to the longitudinal axis of the entry opening (4).

17. Fifth-wheel coupling according to any one of claims 13 to 16, **characterised in that** there is provided a disabling device (82) which disables the blocking element (400) in its blocking position.

18. Fifth-wheel coupling according to any one of claims 9 to 17, **characterised in that** at least one operating device (50, 60) is arranged on the fifth-wheel coupling (1) to be visible from the outside.

19. Fifth-wheel coupling according to claim 18, **characterised in that** the operating device (50, 60) has an optical and/or acoustic device (58).

20. Fifth-wheel coupling according to any one of claims 9 to 19, **characterised in that** the operating device (50, 80) is arranged in a housing (52, 62).

## Revendications

1. Sellette d'attelage (1), avec une plaque de sellette d'attelage (2) sur laquelle est disposée une ouverture d'introduction (4) pour un pivot d'attelage (5), avec un dispositif de fermeture (100) pour fixer en position le pivot d'attelage (5) et avec un élément de fixation en position qui engage le dispositif de fermeture (100) et qui peut être déplacé d'une position fermée dans une position ouverte et inversement,
**caractérisée en ce qu'**il est prévu un dispositif de sécurité (15) avec un élément de verrouillage (40, 400) qui peut être déplacé d'une position de repos dans une position verrouillée et inversement,
et **en ce que** l'élément de verrouillage (40, 400) fait saillie dans l'ouverture d'introduction (4) au moins dans la position verrouillée,
et **en ce que** l'élément de verrouillage (40, 400) est fixé en position dans la position verrouillée et forme ainsi un verrouillage mécanique qui bloque la sortie du pivot d'attelage (5) même si l'élément de fixation en position se trouve de manière non autorisée en position ouverte.

2. Sellette d'attelage (1) selon la revendication 1, **caractérisée en ce que** l'élément de fixation en position est un verrou de fermeture (20) et **en ce que** l'élément de verrouillage (40) coopère avec un verrou de fermeture (20).

3. Sellette d'attelage selon la revendication 2, **caractérisée en ce que** l'élément de verrouillage (40) est disposé en vis-à-vis du verrou de fermeture (20).

4. Sellette d'attelage selon l'une des revendications 1 à 3, **caractérisée en ce que** l'élément de verrouillage (40) est un verrou de sûreté.

5. Sellette d'attelage selon la revendication 4, **caractérisée en ce que** le verrou de sûreté peut être déplacé dans la même direction que le verrou de fermeture (20).

6. Sellette d'attelage selon la revendication 4 ou 5, **caractérisée en ce que** le verrou de sûreté est fixé de manière amovible sur le verrou de fermeture (20).

7. Sellette d'attelage selon l'une des revendications 2 à 6, **caractérisée en ce que** l'élément de verrouillage (40) présente un premier ensemble de ressort (43) qui, dans la position fermée du verrou de fermeture (20), presse l'élément de verrouillage (40) contre le verrou de fermeture (20).

8. Sellette d'attelage selon l'une des revendications 1 à 7, **caractérisée en ce que** l'élément de verrouillage (40, 400) peut être fixé en position dans la position de repos.

9. Sellette d'attelage selon l'une des revendications 1 à 8, **caractérisée en ce qu'**il est prévu des moyens pour la fixation et position et la libération de l'élément de verrouillage (40, 400), qui comprennent un premier dispositif d'actionnement (50) avec un moyen de blocage et avec au moins un actionneur (54).

10. Sellette d'attelage selon la revendication 9, **caractérisée en ce que** l'élément de verrouillage (40) présente au moins un premier évidement (44) pour l'engagement du moyen de blocage.

11. Sellette d'attelage selon la revendication 9 ou 10, **caractérisée en ce que** le premier dispositif d'actionnement (50) est raccordé à un dispositif de commande (70).

12. Sellette d'attelage selon l'une des revendications 2 à 11, **caractérisée en ce qu'**il est prévu un deuxième dispositif d'actionnement (60) avec un moyen de blocage et un actionneur (64) pour fixer en position le verrou de fermeture (20) dans sa position fermée.

13. Sellette d'attelage selon la revendication 1, **caractérisée en ce que** l'élément de verrouillage (400) est disposé à distance du dispositif de fermeture (100).

14. Sellette d'attelage selon la revendication 13, **caractérisée en ce que** l'élément de verrouillage (400) est disposé à l'intérieur de la deuxième moitié de l'ouverture d'introduction (4), sachant que la deuxième moitié de l'ouverture d'introduction (4) désigne la moitié arrière, dans la direction d'introduction du pivot d'attelage (5), de l'ouverture d'introduction (4).

15. Sellette d'attelage selon la revendication 13 ou 14, **caractérisée en ce que** l'élément de verrouillage (400) est maintenu dans la position verrouillée au moyen d'un deuxième ensemble de ressort (80) et peut être déplacé par un pivot d'attelage entrant ou sortant (5) à l'encontre de la force du deuxième ensemble de ressort (80) pour libérer l'ouverture d'introduction (4), et **en ce que** l'élément de verrouillage (400) peut être fixé en position dans la position verrouillée.

16. Sellette d'attelage selon l'une des revendications 13 à 15, **caractérisée en ce que** l'élément de verrouillage (400) est un verrou de sûreté qui est disposé à déplacement perpendiculairement à l'axe longitudinal de l'ouverture d'introduction (4).

17. Sellette d'attelage selon l'une des revendications 13 à 16, **caractérisée en ce qu'**il est prévu un dispositif de blocage (82) qui bloque l'élément de verrouillage (400) dans sa position verrouillée.

18. Sellette d'attelage selon l'une des revendications 9 à 17, **caractérisée en ce qu'**au moins un dispositif d'actionnement (50, 60) est disposé sur la sellette d'attelage (1) en étant visible de l'extérieur.

19. Sellette d'attelage selon la revendication 18, **caractérisée en ce que** le dispositif d'actionnement (50, 60) présente un dispositif optique et/ou acoustique (58).

20. Sellette d'attelage selon l'une des revendications 9 à 19, **caractérisée en ce que** le dispositif d'actionnement (50, 60) est disposé dans un boîtier (52, 62).
